# EUROPEAN PATENT APPLICATION

(11) **EP 4 641 594 A1**
(43) Date of publication of application: **29.10.2025**
(21) Application number: 25172183.3
(22) Date of filing: 24.04.2025
(51) Int. Cl.: H01F 3/10, H01F 27/38, H01F 37/00, H02M 7/00, H02M 1/00, H02M 3/156, H02M 7/5387, H01F 27/02

(54) **POWER INDUCTOR AND POWER DEVICE**

(30) Priority: 24.04.2024 CN 202410501863
(71) Applicant: Huawei Digital Power Technologies Co., Ltd., Shenzhen, Guangdong 518043 (CN)
(72) Inventor: CHEN, Dong, Shenzhen, Guangdong, 518043 (CN); TANG, Yunyu, Shenzhen, Guangdong, 518043 (CN); SHI, Lei, Shenzhen, Guangdong, 518043 (CN)
(74) Representative: Maiwald GmbH

(57) **Abstract**

This application provides a power inductor and a power device. The power inductor includes a magnetic core and N windings, the magnetic core includes N first magnetic columns, at least N-1 second magnetic columns, N third magnetic columns, N first cover plates, and at least one second cover plate, and N is an integer greater than or equal to 2. The N first magnetic columns are sequentially arranged, and one second magnetic column is disposed between two adjacent first magnetic columns. The N windings are respectively wound around the N first magnetic columns. Two ends of each first magnetic column are respectively connected to one first cover plate and the second cover plate. One end of each second magnetic column is connected between two adjacent first cover plates, and the other end of each second magnetic column is connected to the second cover plate. Each third magnetic column is located between two wire connectors of one winding, and two ends of each third magnetic column are respectively connected to one first cover plate and the second cover plate. In the power inductor in this application, a coupling coefficient between inductor units of two adjacent phases is reduced by adding a magnetic circuit. This helps reduce costs of the power inductor.

## Description

### TECHNICAL FIELD

This application relates to the field of energy technologies, and in particular, to a power inductor and a power device.

### BACKGROUND

Currently, magnetic elements in power devices such as a photovoltaic inverter or a power supply are more widely used. To adapt to a development trend of high efficiency and miniaturization, the power devices impose a higher requirement on a miniaturization design of the magnetic elements. A power inductor is a main magnetic element in a power device, and reduction of a size of the power inductor plays a key role in implementing a miniaturization design of the power device.

Currently, in the art, to reduce space occupied by the power inductor in the power device, a plurality of power inductors are usually designed in an integrated manner. However, in an existing integrated power inductor, a coupling coefficient between inductor units of adjacent phases is relatively large. This leads to relatively large mutual impact between inductor magnetic circuits of the inductor units of adjacent phases, thereby affecting magnetic conductivity of the power inductor.

### SUMMARY

This application provides a power inductor and a power device, to reduce a coupling coefficient between inductor units of two adjacent phases in the power inductor, and improve magnetic conductivity of the power inductor.

According to a first aspect, this application provides a power device. The power device includes an inverter circuit, the inverter circuit includes N inverter bridge arms and a filter inductor, and N is an integer greater than or equal to 2. When the filter inductor is specifically disposed, the filter inductor includes a magnetic core and N windings. The magnetic core includes N first magnetic columns, at least N-1 second magnetic columns, N third magnetic columns, N first cover plates, and at least one second cover plate. In a direction perpendicular to an axial direction of the first magnetic column, the N first magnetic columns are sequentially arranged, and one second magnetic column is disposed between two adjacent first magnetic columns. In addition, the N first cover plates are connected to ends of the N first magnetic columns in a one-to-one correspondence, and the other end of each first magnetic column is connected to the second cover plate, so that each first magnetic column is connected between one first cover plate and the second cover plate. One end of each second magnetic column is connected between two adjacent first cover plates, and the other end of each second magnetic column is connected to the second cover plate. Each third magnetic column is located between two wire connectors of one winding, one end of each third magnetic column is connected to one first cover plate, and the other end of each third magnetic column is connected to one second cover plate. The N windings are wound around the N first magnetic columns in a one-to-one correspondence, and the N windings are respectively connected to output loops of different inverter bridge arms in the N inverter bridge arms. In the power device provided in this application, because an inductor unit of each phase of the power inductor includes a plurality of magnetic circuits, most of magnetic flux generated by the inductor unit of the phase may be conducted through the magnetic circuits of the inductor unit of the phase. This can effectively avoid mutual impact between inductor units of two adjacent phases in the power inductor, that is, reduce a coupling coefficient between the inductor units of two adjacent phases, thereby helping improve magnetic conductivity of the power inductor, so that a power conversion requirement of the power device can be met.

In a possible implementation of this application, the magnetic core includes N+1 second magnetic columns, and each first magnetic column is located between two adjacent second magnetic columns. In this way, magnetic circuits may be separately formed between each first magnetic column and two adjacent second magnetic columns, thereby increasing a magnetic circuit of an inductor unit of each phase, to help reduce a coupling coefficient between inductor units of two adjacent phases.

In a possible implementation of this application, the magnetic core may include one second cover plate. In this case, the other ends of the N first magnetic columns are all connected to the second cover plate, and each second magnetic column is also connected to the second cover plate. This helps improve integration of the power inductor, thereby helping reduce a size of the power inductor, so that space occupied by the power inductor is relatively small. This helps implement a miniaturization design of the power device. In addition, in a case that internal space of the power device remains unchanged, the internal space of the power device can further meet a disposing requirement of more components. This helps improve function diversity of the power device.

In a possible implementation of this application, the magnetic core includes N second cover plates, the N second cover plates are connected to the other ends of the N first magnetic columns in a one-to-one correspondence, and the other end of each second magnetic column connected between two adjacent first cover plates is connected between two adjacent second cover plates. In this way, disposing flexibility of the first cover plate and the second cover plate can be improved, thereby helping improve disposing flexibility of an inductor unit of each phase in the power inductor.

In a possible implementation of this application, one end of one side surface of each third magnetic column is connected to one first cover plate, and another end of the side surface of each third magnetic column is connected to one second cover plate. In this case, one side surface of the third magnetic column is connected to side surfaces on a same side that are of the corresponding first cover plate and the corresponding second cover plate, so that disposing of the third magnetic column can make full use of space between two wire connectors of a winding, thereby helping improve energy density of the power inductor without significantly increasing a cross-sectional area of the power inductor.

In another possible implementation of this application, each third magnetic column is located between one first cover plate and one second cover plate. In this way, space between the first cover plate and the second cover plate can be fully utilized, thereby helping improve power density of the power inductor.

In addition, the third magnetic column includes an arc-shaped surface, and the arc-shaped surface is recessed in a direction away from the winding. This can help increase a cross-sectional area of the third magnetic column, thereby helping reduce magnetic resistance of the third magnetic column, to help improve magnetic flux of the third magnetic column, and then reduce a coupling coefficient between inductor units of two adjacent phases.

In a possible implementation of this application, the first magnetic column, the second magnetic column, and the third magnetic column are made of a same material. For example, the first magnetic column, the second magnetic column, and the third magnetic column may all use a relatively low-price material such as a metal powder core material. This helps control costs of the entire power inductor, thereby helping reduce costs of the power device.

In another possible implementation of this application, a magnetic permeability of the second magnetic column is greater than a magnetic permeability of the first magnetic column. In this way, a coupling coefficient between inductor units of two adjacent phases can be effectively reduced. This helps improve magnetic conductivity of the power inductor, thereby meeting a power conversion requirement of the power device.

In addition, the magnetic permeability of the second magnetic column is further greater than a magnetic permeability of the first cover plate and a magnetic permeability of the second cover plate. This can further reduce a coupling coefficient between inductor units of two adjacent phases, to help improve magnetic conductivity of the power inductor, thereby meeting a power conversion requirement of the power device.

In a possible implementation of this application, wire connectors of the N windings are all located on a same side of the magnetic core. In this way, the third magnetic columns in the power inductor can be disposed on the same side. This helps improve structural compactness of the entire power inductor, thereby helping reduce a size of the power inductor.

In a possible implementation of this application, a surface that is of the first magnetic column and that is away from the third magnetic column includes a plane. In this way, a part that is of the winding and that is wound on the plane can form a relatively flat contact surface, and the contact surface may be used as a heat dissipation surface of the power inductor.

In addition, the filter inductor further includes a housing having an opening, the magnetic core and the winding are accommodated in the housing, and an outer surface of the part that is of the winding and that is wound on the plane of the first magnetic column is in contact with an inner side wall of the housing. This helps increase an area of contact between the power inductor and the housing, thereby helping improve heat dissipation performance of the power inductor.

In a possible implementation of this application, the power device further includes a chassis and a circuit board, the circuit board is accommodated in the chassis, and the N inverter bridge arms are disposed on the circuit board. The filter inductor is located outside the chassis, the chassis includes a slot, and the opening of the housing is connected to an edge of the slot. In this case, the wire connectors of the N windings are all connected to the output loops of the different inverter bridge arms in the N inverter bridge arms through the slot. In this way, the filter inductor can dissipate heat by using the housing of the filter inductor. This helps meet a heat dissipation requirement of a power inductor with relatively high power.

In another possible implementation of this application, the power device further includes a chassis and a circuit board, the circuit board is accommodated in the chassis, and the N inverter bridge arms are disposed on the circuit board. In addition, the filter inductor is accommodated in the chassis, a surface that is of the first magnetic column and that is away from the third magnetic column includes a plane, an outer surface of a part that is of the winding and that is wound on the plane of the first magnetic column is in contact with an inner wall surface of the chassis, and the wire connectors of the N windings are connected to the output loops of the different inverter bridge arms in the N inverter bridge arms. This can help increase an area of contact between the power inductor and the inner wall surface of the chassis, thereby helping improve heat dissipation efficiency of the power inductor.

According to a second aspect, this application further provides a power device. The power device includes N direct current conversion circuits, each direct current conversion circuit includes at least one switch module and a power inductor, and N is an integer greater than or equal to 2. When the power inductor is specifically disposed, the power inductor includes a magnetic core and N windings. The magnetic core includes N first magnetic columns, at least N-1 second magnetic columns, N third magnetic columns, N first cover plates, and at least one second cover plate. In a direction perpendicular to an axial direction of the first magnetic column, the N first magnetic columns are sequentially arranged, and one second magnetic column is disposed between two adjacent first magnetic columns. In addition, the N first cover plates are connected to ends of the N first magnetic columns in a one-to-one correspondence, and the other end of each first magnetic column is connected to the second cover plate, so that each first magnetic column is connected between one first cover plate and the second cover plate. One end of each second magnetic column is connected between two adjacent first cover plates, and the other end of each second magnetic column is connected to the second cover plate. Each third magnetic column is located between two wire connectors of one winding, one end of each third magnetic column is connected to one first cover plate, and the other end of each third magnetic column is connected to one second cover plate. The N windings are wound around the N first magnetic columns in a one-to-one correspondence, and the N windings each are connected to at least one switch module in a different direct current conversion circuit in the N direct current conversion circuits. In the power device provided in this application, because an inductor unit of each phase of the power inductor includes a plurality of magnetic circuits, most of magnetic flux generated by the inductor unit of the phase may be conducted through the magnetic circuits of the inductor unit of the phase. This can effectively avoid mutual impact between inductor units of two adjacent phases in the power inductor, that is, reduce a coupling coefficient between the inductor units of two adjacent phases, thereby helping improve magnetic conductivity of the power inductor, so that a power conversion requirement of the power device can be met.

According to a third aspect, this application further provides a power inductor. The power inductor includes a magnetic core and N windings. The magnetic core includes N first magnetic columns, at least N-1 second magnetic columns, N third magnetic columns, N first cover plates, and at least one second cover plate. In a direction perpendicular to an axial direction of the first magnetic column, the N first magnetic columns are sequentially arranged, and one second magnetic column is disposed between two adjacent first magnetic columns. In addition, the N first cover plates are connected to ends of the N first magnetic columns in a one-to-one correspondence, and the other end of each first magnetic column is connected to the second cover plate, so that each first magnetic column is connected between one first cover plate and the second cover plate. One end of each second magnetic column is connected between two adjacent first cover plates, and the other end of each second magnetic column is connected to the second cover plate. Each third magnetic column is located between two wire connectors of one winding, one end of each third magnetic column is connected to one first cover plate, and the other end of each third magnetic column is connected to one second cover plate. The N windings are wound around the N first magnetic columns in a one-to-one correspondence. In the power inductor provided in this application, because an inductor unit of each phase includes a plurality of magnetic circuits, most of magnetic flux generated by the inductor unit of the phase may be conducted through the magnetic circuits of the inductor unit of the phase. This can effectively avoid mutual impact between inductor units of two adjacent phases in the power inductor, that is, reduce a coupling coefficient between the inductor units of two adjacent phases, thereby helping improve magnetic conductivity of the power inductor.

### BRIEF DESCRIPTION OF DRAWINGS

FIG. 1 is a diagram of a structure of a photovoltaic power generation system according to an embodiment of this application;
FIG. 2 is a simplified diagram of a circuit topology structure of an inverter according to an embodiment of this application;
FIG. 3 is a diagram of a structure of a magnetic core of a power inductor according to an embodiment of this application;
FIG. 4 is a top view of a structure of a power inductor according to an embodiment of this application;
FIG. 5 is an A-direction view of the power inductor shown in FIG. 4;
FIG. 6 is an exploded view of another structure of a power inductor according to an embodiment of this application;
FIG. 7 is a diagram of another structure of a power inductor according to an embodiment of this application;
FIG. 8 is a diagram of another structure of a power inductor according to an embodiment of this application;
FIG. 9 is a B-direction view of the power inductor shown in FIG. 8;
FIG. 10 is a diagram of a structure of an inverter according to an embodiment of this application; and
FIG. 11 is a diagram of another structure of an inverter according to an embodiment of this application.

Reference numerals:
1000: photovoltaic module; 2000: inverter; 2001: direct current conversion circuit; 2001a: first boost circuit;
2001b: second boost circuit; 20001: boost inductor; 2002: inverter circuit; 20002: output end of an inverter bridge arm;
20003: filter inductor; 2003: chassis; 20031: slot; 20032: inner wall surface of the chassis; 2004: circuit board;
3000: load;
100: power inductor; 1: magnetic core; 101: first magnetic column; 1011: plane; 102: first cover plate; 103: second cover plate; 104: second magnetic column;
105: third magnetic column; 1051: arc-shaped surface; 2: winding; 201: wire connector; 3: housing; 301: inner side wall of the housing.

### DESCRIPTION OF EMBODIMENTS

To make the objectives, technical solutions, and advantages of this application clearer, the following further describes this application in detail with reference to the accompanying drawings. However, example implementations can be implemented in a plurality of forms, and should not be construed as being limited to the implementations described herein. Identical reference numerals in the accompanying drawings denote identical or similar structures. Therefore, repeated descriptions thereof are omitted. Expressions of positions and directions in embodiments of this application are described by using the accompanying drawings as an example. However, changes may be also made as required, and all the changes fall within the protection scope of this application. The accompanying drawings in embodiments of this application are merely used to illustrate relative position relationships and do not represent an actual scale.

It should be noted that specific details are set forth in the following descriptions for ease of understanding this application. However, this application can be implemented in a plurality of manners different from those described herein, and a person skilled in the art can make similar inferences without departing from the connotation of this application. Therefore, this application is not limited to the following disclosed specific implementations.

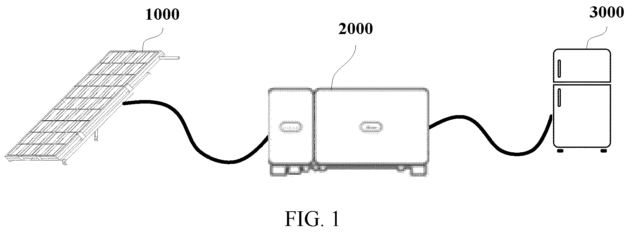

To facilitate understanding of a power inductor provided in this application, the following first describes an application scenario of the power inductor. The power inductor may be used in a scenario such as an energy storage system, a photovoltaic power generation system, a photovoltaic energy storage system, or a charging network. For example, the power inductor may be used in a component configured to implement power conversion, such as an energy storage converter, a transformer, a photovoltaic inverter, an uninterruptible power supply (uninterruptible power supply, UPS), or a power supply. A photovoltaic power generation system scenario is used as an example. Refer to FIG. 1. FIG. 1 is a diagram of a structure of a photovoltaic power generation system according to an embodiment of this application. The photovoltaic power generation system is a system that converts solar energy into electric energy by using photovoltaic effect of a semiconductor material. The photovoltaic power generation system may usually include a photovoltaic module 1000, an inverter 2000, and a load 3000. The photovoltaic module 1000 may be configured to convert solar energy into electric energy, and a direct current input end of the inverter 2000 is configured to connect to the photovoltaic module 1000. In addition, an alternating current output end of the inverter 2000 is connected to the load 3000. The load 3000 may be a power-consuming device or a power grid, and may be, for example, a three-phase load. In this case, the inverter 2000 may be configured to perform power conversion on a current of a direct current from the photovoltaic module 1000, or may be configured to perform power conversion on a voltage of a direct current from the photovoltaic module 1000, so that power output by the inverter matches power of the load 3000.

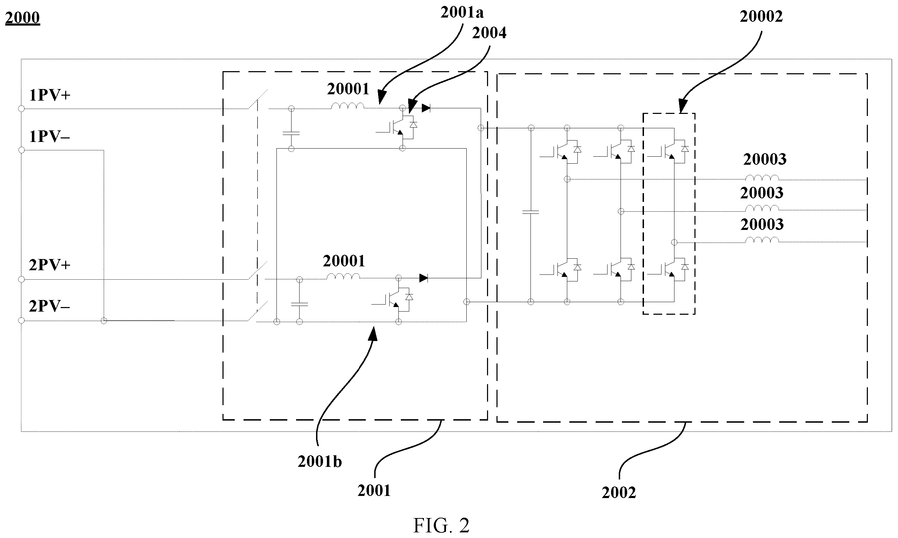

Refer to FIG. 2. FIG. 2 is a simplified diagram of a circuit topology structure of an inverter 2000 according to an embodiment of this application. FIG. 2 shows a scenario in which a direct current input end of a direct current conversion circuit 2001 of the inverter 2000 is connected to two direct currents converted by a photovoltaic module. In this case, the direct current conversion circuit 2001 of the inverter 2000 includes a first boost circuit 2001a and a second boost circuit 2001b. Each of the first boost circuit 2001a and the second boost circuit 2001b is connected to a boost inductor 20001.

In addition, in FIG. 2, the inverter 2000 further includes an inverter circuit 2002, and a direct current input end of the inverter circuit 2002 is connected to a direct current output end of the first boost circuit 2001a and a direct current output end of the second boost circuit 2001b. The inverter circuit 2002 includes three inverter bridge arms 20002, and each inverter bridge arm 20002 is connected to one filter inductor 20003. In this case, the inverter circuit 2002 may be configured to connect to a three-phase load.

It may be understood that, when the direct current input end of the direct current conversion circuit 2001 of the inverter 2000 is connected to three or more direct currents, the direct current input end of the direct current conversion circuit 2001 of the inverter 2000 may further include three or more boost inductors 20001. In addition, when the inverter 2000 is connected to a three-phase four-wire load, the inverter circuit 2002 of the inverter 2000 may be connected to four filter inductors 20003.

Therefore, it can be learned that there are a relatively large quantity of power inductors in the inverter 2000. Because a size of each power inductor is relatively large, if each power inductor is disposed independently, the power inductor occupies relatively large arrangement space in the inverter 2000. This is not conducive to implementing a miniaturization design of the inverter 2000. To resolve this problem, currently, in the art, a plurality of power inductors are designed in an integrated manner, to reduce a total size of the plurality of power inductors. A principle of the integrated design of the plurality of power inductors is as follows: A manner in which inductor units of two adjacent phases share a magnetic column is used, so that the inductor units of two adjacent phases share a magnetic circuit. In addition, to reduce mutual interference between the inductor units of two adjacent phases that share the magnetic circuit, currently, the shared magnetic column is usually made of a material with a high magnetic permeability. This causes relatively high costs of an entire power inductor structure, and is not conducive to commercialization of an integrated power inductor structure.

In view of this, in the power inductor provided in embodiments of this application, a magnetic circuit is added for a single inductor unit, to reduce a coupling coefficient between inductor units of two adjacent phases, thereby improving magnetic conductivity of the entire power inductor. In this design manner, not only the power inductor can meet a power conversion requirement of a power device, but also space occupied by the power inductor can be effectively reduced, thereby helping implement a miniaturization design of the power device. To facilitate understanding of the power inductor provided in this application, the following describes the power inductor in detail with reference to specific embodiments.

The power inductor may usually include a magnetic core and a winding. The magnetic core is usually used as a magnetic conductive material of the power inductor. The winding is a winding made of a copper wire or an aluminum wire. In the inductor, the winding is configured to conduct a current.

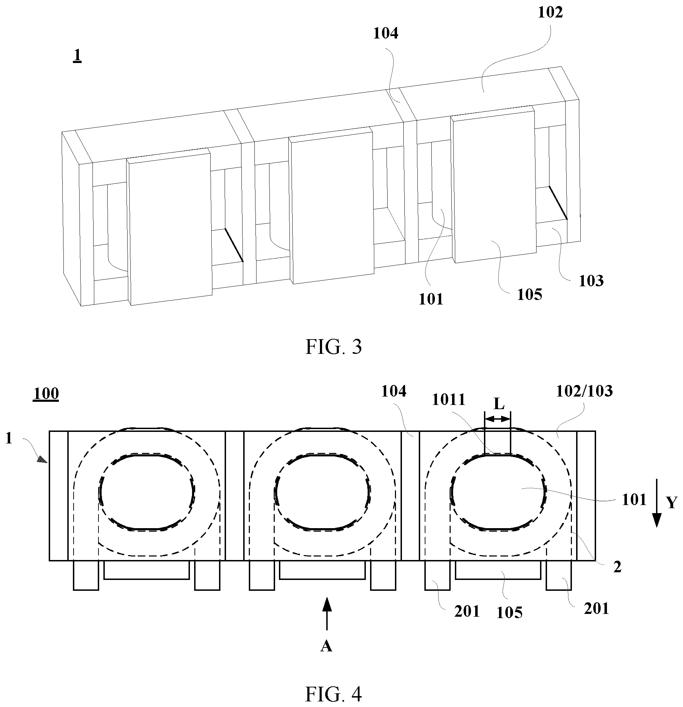

Refer to FIG. 3. FIG. 3 is a diagram of a structure of a magnetic core of a power inductor according to an embodiment of this application. In this application, the magnetic core 1 of the power inductor includes N first magnetic columns 101, and the N first magnetic columns 101 are sequentially arranged in a direction perpendicular to an axial direction of the first magnetic column 101. In addition, the magnetic core 1 further includes N first cover plates 102 and N second cover plates 103. The N first cover plates 102 are connected to ends of the N first magnetic columns 101 in a one-to-one correspondence, and the N second cover plates 103 are connected to the other ends of the N first magnetic columns 101 in a one-to-one correspondence, so that each first magnetic column 101 is connected between one first cover plate 102 and one second cover plate 103. In this embodiment, the N first cover plates 102 and the N second cover plates 103 are disposed in a one-to-one correspondence with the N first magnetic columns 101. This can help improve disposing flexibility of the N first cover plates 102 and the N second cover plates 103, thereby helping improve disposing flexibility of an inductor unit of each phase.

In this application, a specific connection manner between structures in the magnetic core 1 is not limited. For example, the connection manner may be bonding, to help improve production efficiency of the magnetic core 1.

Still refer to FIG. 3. The magnetic core 1 further includes a second magnetic column 104, and one second magnetic column 104 is disposed between any two adjacent first magnetic columns 101. One end of each second magnetic column 104 is connected between two adjacent first cover plates 102, that is, one end of each second magnetic column 104 is located between two adjacent first cover plates 102, and two side surfaces at one end of each second magnetic column 104 are respectively connected to two adjacent first cover plates 102 in an arrangement direction of the N first magnetic columns 101. In addition, as shown in FIG. 3, the other end of each second magnetic column 104 is connected between two adjacent second cover plates 103, that is, the other end of each second magnetic column 104 is located between two adjacent second cover plates 103, and two side surfaces at the other end of each second magnetic column 104 are respectively connected to two adjacent second cover plates 103 in the arrangement direction of the N first magnetic columns 101.

Refer to FIG. 4. FIG. 4 is a top view of a structure of a power inductor according to an embodiment of this application. The power inductor 100 further includes N windings 2, each winding 2 includes two wire connectors 201, and the N windings 2 are wound around the N first magnetic columns 101 in a one-to-one correspondence. In addition, as shown in FIG. 4, in this application, the magnetic core 1 further includes N third magnetic columns 105, each third magnetic column 105 is located between two wire connectors 201 of one winding 2, one end of each third magnetic column 105 is connected to one first cover plate 102, and the other end of each third magnetic column 105 is connected to one second cover plate 103. In this way, disposing of the third magnetic column 105 can make full use of space between the two wire connectors 201 of the winding 2, thereby helping improve energy density of the power inductor 100 without significantly increasing a projection area of the power inductor 100 in a direction shown by A in FIG. 4.

It can be learned from FIG. 3 and FIG. 4 together that, in embodiments of this application, a cross-sectional shape of the second magnetic column 104 may be a rectangle, to improve reliability of connections between the second magnetic column 104 and the adjacent first cover plate 102 and the adjacent second cover plate 103. In addition, a cross-sectional shape of the third magnetic column 105 may also be a rectangle, to implement reliable connections between the third magnetic column 105 and the first cover plate 102 and the second cover plate 103.

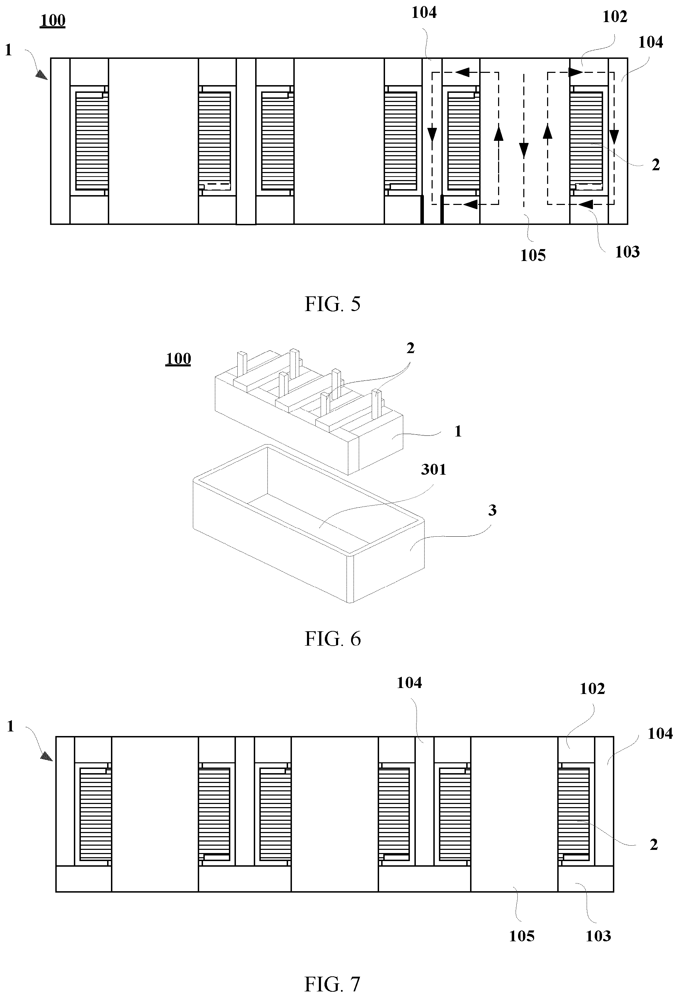

Refer to FIG. 5. FIG. 5 is an A-direction view of the power inductor shown in FIG. 4, and FIG. 5 may be used to show a relative position relationship between the third magnetic column 105 of the power inductor 100 shown in FIG. 4 and the first cover plate 102 and the second cover plate 103. Specifically, the third magnetic column 105 is located on a same side of the first cover plate 102 and the second cover plate 103 that are connected to the third magnetic column 105. In this case, one end of one side surface of each third magnetic column 105 is connected to one first cover plate 102, and another end of the side surface of each third magnetic column 105 is connected to one second cover plate 103.

In addition, refer to FIG. 4 and FIG. 5 together. In this application, wire connectors 201 of the windings 2 of the power inductor 100 have a same leading-out manner, that is, the wire connectors 201 of the N windings 2 are all located on a same side of the magnetic core 1. In this way, the third magnetic columns 105 in the power inductor 100 can be disposed on a same side. This helps improve structural compactness of the entire power inductor 100, and helps reduce a plate area occupied by the power inductor 100.

Still refer to FIG. 4. In embodiments of this application, a surface that is of the first magnetic column 101 and that is away from the third magnetic column 105 may further include a plane 1011. In this way, a part that is of the winding 2 and that is wound on the plane 1011 can form a relatively flat contact surface, and the contact surface may be used as a heat dissipation surface of the power inductor 100. It may be understood that, in the arrangement direction of the N first magnetic columns 101, a width L of the plane 1011 may be selected based on a size of the first magnetic column 101, a size of the entire magnetic core 1, and a specific heat dissipation requirement of the power inductor 100.

When the power inductor 100 further includes a housing 3, reference is made to FIG. 6. FIG. 6 is an exploded view of another structure of a power inductor according to an embodiment of this application. The housing 3 has an opening, the magnetic core 1 and the winding 2 may be accommodated in the housing 3, and an outer surface of the part that is of the winding 2 and that is wound on the plane of the first magnetic column 101 may be in contact with the housing 3. The outer surface of the part that is of the winding 2 and that is wound on the plane of the first magnetic column 101 may be directly in contact with an inner side wall 301 of the housing (for example, a bottom wall of the housing 3), or may be in contact with an inner side wall 301 of the housing by using a thermal interface material (not shown in FIG. 6), to implement heat dissipation of the entire power inductor 100 by using the housing 3. Because the foregoing disposing manner helps increase an area of contact between the power inductor 100 and the inner side wall 301 of the housing, the disposing manner helps improve heat dissipation performance of the power inductor 100.

It should be noted that, in some possible embodiments of this application, the outer surface of the part that is of the winding 2 and that is wound on the plane of the first magnetic column 101 may be further configured to be in contact with a heat dissipation apparatus or a heat dissipation housing of a power device on which the power inductor 100 is disposed, to implement heat dissipation of the power inductor 100 by using the heat dissipation apparatus or the heat dissipation housing of the power device.

In this application, a cross-sectional shape of the first magnetic column 101 is not limited. For example, the cross-sectional shape of the first magnetic column 101 is a runway shape shown in FIG. 4. Alternatively, in some possible embodiments, the cross-sectional shape of the first magnetic column 101 may alternatively be a circle, an ellipse, a rectangle, or the like.

The foregoing disposing manner is used for the power inductor 100 provided in this application. A structure including one first magnetic column 101, a winding 2 that is wound around the first magnetic column 101, one first cover plate 102 and one second cover plate 103 that are connected to the first magnetic column 101, and a second magnetic column 104 and a third magnetic column 105 that are disposed adjacent to the first magnetic column 101 may be considered as an inductor unit of one phase. Therefore, the power inductor shown in FIG. 4 includes inductor units of three phases, and inductor units of any two adjacent phases in the inductor units of three phases share one second magnetic column 104.

As shown in FIG. 5, for an inductor unit of each phase, magnetic flux generated by the inductor unit of the phase may be conducted through the first magnetic column 101, the first cover plate 102, the second magnetic column 104, and the second cover plate 103, and may also be conducted through the first magnetic column 101, the first cover plate 102, the third magnetic column 105, and the second cover plate 103. In this way, a plurality of magnetic circuits may be formed in an inductor unit of each phase, so that most of magnetic flux generated by the inductor unit of the phase may be conducted through the magnetic circuits of the inductor unit of the phase. This can effectively avoid mutual impact between inductor units of two adjacent phases, that is, reduce a coupling coefficient between the inductor units of two adjacent phases, thereby helping improve magnetic conductivity of the power inductor 100.

In addition, in the power inductor 100 shown in FIG. 5, one end of each second magnetic column 104 located between two adjacent first magnetic columns 101 is connected between two adjacent first cover plates 102, and the other end of the second magnetic column 104 is connected between two adjacent second cover plates 103. In this way, an air gap between inductor units of two adjacent phases at a joint between the second magnetic column 104 and the adjacent first cover plate 102 and the adjacent second cover plate 103 can be increased, thereby helping reduce a coupling coefficient between the inductor units of two adjacent phases, reducing mutual impact between the inductor units of two adjacent phases, and improving integration of the power inductor 100.

It can be learned from the foregoing description of the design principle of the power inductor 100 provided in embodiments of this application that, adding a magnetic circuit in an inductor unit of a single phase can help reduce a coupling coefficient between inductor units of two adjacent phases. Therefore, as shown in FIG. 4, in the power inductor 100 provided in embodiments of this application, there may be at least N-1 second magnetic columns 104. In addition, a quantity of second magnetic columns 104 may be one more than a quantity of first magnetic columns 101, that is, the magnetic core 1 includes N+1 second magnetic columns 104. In this way, each first magnetic column 101 may be located between two adjacent second magnetic columns 104, and an inductor unit of each phase includes two second magnetic columns 104, so that magnetic circuits that respectively pass through the two second magnetic columns 104 may be formed in the inductor unit of each phase. This helps increase a quantity of magnetic circuits in the inductor unit of each phase, thereby helping reduce a coupling coefficient between inductor units of two adjacent phases, and helping reduce mutual impact between magnetic flux generated by the inductor units of two adjacent phases.

In the power inductor 100 shown in FIG. 4, in the arrangement direction of the plurality of first magnetic columns 101, ends of two second magnetic columns 104 located at two ends are connected to a side surface of an adjacent first cover plate 102, and the other ends of the two second magnetic columns 104 located at the two ends are connected to a side surface of an adjacent second cover plate 103.

It should be noted that, in the power inductor 100 provided in embodiments of this application, because most of magnetic flux generated by an inductor unit of each phase may be conducted through a plurality of magnetic circuits of the inductor unit, a coupling coefficient between inductor units of two adjacent phases can be effectively reduced. Therefore, in the power inductor 100, the first magnetic column 101, the second magnetic column 104, and the third magnetic column 105 may use a same magnetic core material. For example, the magnetic core material may be a metal powder core material such as ferro silicon aluminum. This can help control costs of the magnetic core 1, thereby helping reduce costs of the entire power inductor. In some other possible embodiments of this application, a magnetic permeability of the second magnetic column 104 may be further greater than a magnetic permeability of the first magnetic column 101. In this case, a material of the first magnetic column 101 may be a metal powder core, and the second magnetic column 104 is made of a material with a high magnetic permeability, such as a ferrite, a nanocrystalline, or a nano-amorphous. It may be understood that, when the second magnetic column 104 uses the strip material with the high magnetic permeability, a layered structure in the second magnetic column 104 may be stacked in a Y direction shown in FIG. 4. The Y direction is perpendicular to the arrangement direction of the N first magnetic columns 101, and is perpendicular to the axial direction of the first magnetic column 101. In this way, magnetic flux can be conducted through each layered structure of the second magnetic column 104. This helps improve uniformity of the magnetic flux in the second magnetic column 104. In addition, in some possible embodiments, the magnetic permeability of the second magnetic column 104 may be further greater than a magnetic permeability of the first cover plate 102 and a magnetic permeability of the second cover plate 103.

The foregoing is merely an example of a specific disposing manner of the power inductor 100 provided in this application. Based on the foregoing design principle of the power inductor 100, in actual application, some adaptive deformations may be further performed on the structure of the power inductor 100 based on a specific use requirement. For example, refer to FIG. 7. FIG. 7 is a diagram of another structure of a power inductor according to an embodiment of this application. Different from the foregoing embodiment, in the power inductor shown in FIG. 7, the magnetic core 1 includes one second cover plate 103, and the other ends of the N first magnetic columns 101 are all connected to the one second cover plate 103. In addition, the other end of each second magnetic column 104 is also connected to the one second cover plate 103. This helps improve integration of the magnetic core 1, thereby improving structural reliability of the magnetic core 1.

Still refer to FIG. 7. In the power inductor, in the arrangement direction of the plurality of first magnetic columns 101, ends of two second magnetic columns 104 located at two ends are connected to a side surface of an adjacent first cover plate 102, and the other ends of the two second magnetic columns 104 located at the two ends are connected to an end surface that is of the same second cover plate 103 and that faces the first cover plate 102. In some other possible embodiments of this application, in the arrangement direction of the plurality of first magnetic columns 101, the two second magnetic columns 104 located at the two ends may alternatively be disposed with reference to the power inductor shown in FIG. 4.

Other structures of the power device shown in FIG. 7 may be disposed with reference to the foregoing embodiments. Details are not described herein. However, it should be understood that the structures all fall within the protection scope of this application.

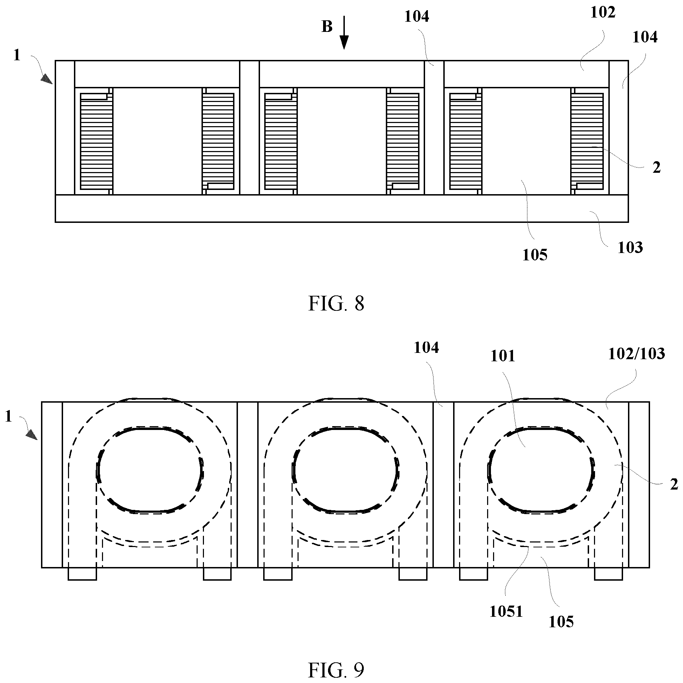

In the foregoing embodiments, each third magnetic column 105 is located on a same side of the first cover plate 102 and the second cover plate 103. In another embodiment, a disposing position of the third magnetic column 105 may be further adjusted based on a specific size of each structure of the magnetic core 1. For example, refer to FIG. 8. FIG. 8 is a diagram of another structure of a power inductor according to an embodiment of this application. Different from the foregoing embodiments, in the power inductor shown in FIG. 8, each third magnetic column 105 is located between one first cover plate 102 and one second cover plate 103, that is, one end of the third magnetic column 105 is connected to an end surface that is of the first cover plate 102 and that faces the second cover plate 103, and the other end of the third magnetic column 105 is connected to an end surface that is of the second cover plate 103 and that faces the first cover plate 102. It may be understood that, in the power inductor shown in FIG. 8, dimensions of the first cover plate 102 and the second cover plate 103 in the Y direction are relatively large, and the third magnetic column 105 is connected between the first cover plate 102 and the second cover plate 103, so that space between the first cover plate 102 and the second cover plate 103 can be fully used, thereby helping improve power density of the power inductor.

In addition, refer to FIG. 9. FIG. 9 is a B-direction view of the power inductor shown in FIG. 8. In this embodiment, the third magnetic column 105 includes an arc-shaped surface 1051, and the arc-shaped surface 1051 is recessed in a direction away from the winding 2. In addition, a shape of the arc-shaped surface 1051 is basically consistent with a shape of an outer surface of the winding 2. This can help increase a cross-sectional area of the third magnetic column 105, thereby helping reduce magnetic resistance of the third magnetic column 105, to help improve magnetic flux of the third magnetic column 105, and then reduce a coupling coefficient between inductor units of two adjacent phases.

In this application, a specific shape of the arc-shaped surface 1051 of the third magnetic column 105 is not limited. For example, the shape may match the shape of the outer surface of the winding 2, to improve space utilization between the first cover plate 102 and the second cover plate 103, and help increase the cross-sectional area of the third magnetic column 105.

Other structures of the power device shown in FIG. 8 and FIG. 9 may be disposed with reference to the foregoing embodiments. Details are not described herein. However, it should be understood that the structures all fall within the protection scope of this application.

The foregoing describes only some examples of the specific structure of the power inductor provided in this application with reference to a specific application scenario. In some other possible embodiments of this application, the specific structure of the power inductor may further be adaptively deformed based on a specific power conversion requirement. For example, the magnetic core 1 may include N second magnetic columns 104, or the like. The deformation is not listed herein one by one, but it should be understood that the deformation falls within the protection scope of this application.

It may be understood that the power inductor 100 provided in embodiments of this application may be used in the inverter circuit 2002 of the inverter. Specifically, the inverter circuit 2002 includes N inverter bridge arms, and an output loop of each inverter bridge arm may be connected to one filter inductor. For example, the inverter circuit includes three inverter bridge arms. In this case, the power inductor includes inductor units of three phases, that is, the power inductor includes three windings 2. The three windings 2 of the power inductor 100 may be respectively connected to output loops of different inverter bridge arms in the three inverter bridge arms of the inverter circuit, so that the power inductor 100 can be used as a filter inductor of the inverter circuit 2002. The filter inductor of the inverter circuit 2002 is disposed in the manner of disposing the power inductor 100 provided in this application, so that a coupling coefficient between filter inductors of two adjacent phases can be effectively reduced, thereby reducing mutual impact between the filter inductors of two adjacent phases, improving integration of the power inductor 100, and improving integration of the inverter circuit 2002.

In addition, when the inverter is a three-phase four-wire inverter, the inverter circuit 2002 includes four inverter bridge arms. To meet a power conversion requirement of the alternating current output end of the inverter, the power inductor may include inductor units of four phases, which may be specifically disposed with reference to the power inductor shown in FIG. 4 to FIG. 9. Details are not described herein again.

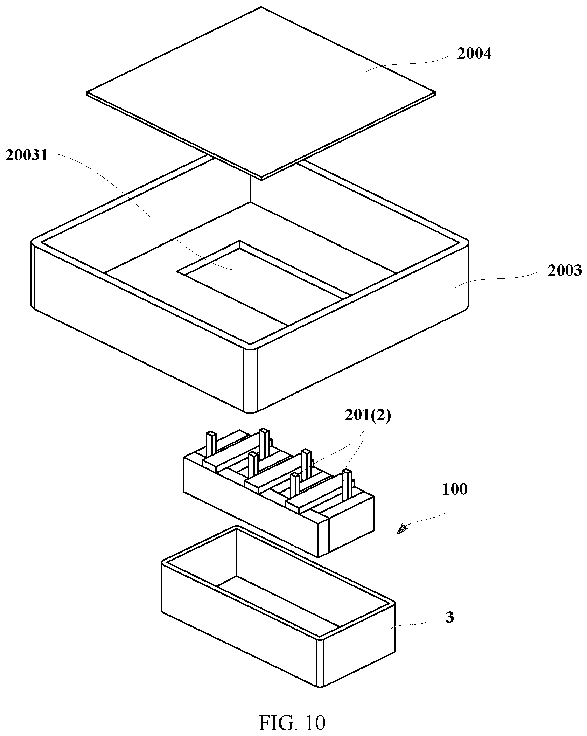

Refer to FIG. 10. FIG. 10 is a diagram of a structure of an inverter according to an embodiment of this application. The inverter further includes a chassis 2003 and a circuit board 2004. The circuit board 2004 is accommodated in the chassis 2003, and the N inverter bridge arms are disposed on the circuit board 2004. In addition, the chassis 2003 includes a slot 20031, the power inductor 100 is located outside the chassis 2003, and the opening of the housing 3 of the power inductor 100 is connected to an edge of the slot. Therefore, the wire connectors 201 of the N windings 2 of the power inductor 100 may be all connected to the output loops of the different inverter bridge arms in the N inverter bridge arms through the slot 20031. It should be noted that, in the inverter shown in FIG. 10, the power inductor 100 includes the housing 3, and therefore the power inductor 100 may dissipate heat by using the housing 3. This helps meet a heat dissipation requirement of a power inductor 100 with relatively high power.

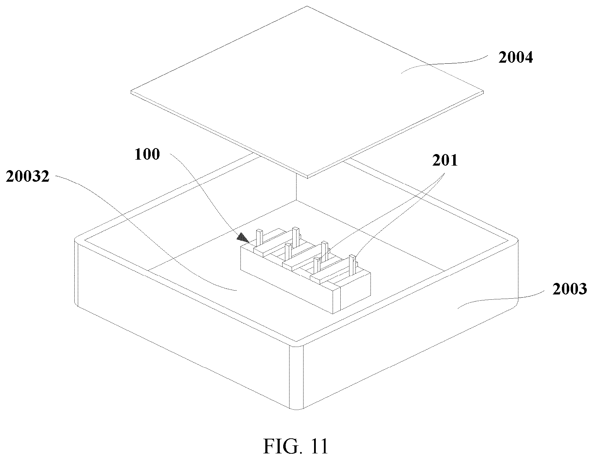

In addition, refer to FIG. 11. FIG. 11 is a diagram of another structure of an inverter according to an embodiment of this application. In this embodiment, the power inductor 100 does not include a housing, and the power inductor 100 is also accommodated in the chassis 2003 of the inverter. In this case, the power inductor 100 may dissipate heat by contacting an inner wall surface 20032 of the chassis. During specific implementation, refer to FIG. 4 and FIG. 11 together. The outer surface of the part that is of the winding 2 and that is wound on the plane of the first magnetic column 101 is in contact with the inner wall surface 20032 of the chassis. Specifically, the outer surface of the part that is of the winding 2 and that is wound on the plane of the first magnetic column 101 is directly in contact with the inner wall surface 20032 of the chassis, or the outer surface of the part that is of the winding 2 and that is wound on the plane of the first magnetic column 101 is in contact with the inner wall surface 20032 of the chassis through a thermal interface material (not shown in FIG. 11). This helps increase an area of contact between the power inductor 100 and the inner wall surface 20032 of the chassis, thereby improving heat dissipation efficiency of the power inductor 100.

In this application, a quantity of inductor units in the power inductor may be selected according to a requirement of a specific application scenario. For example, the power inductor provided in embodiments of this application may be further used in the direct current conversion circuit 2001 of the inverter. During specific implementation, the power inductor includes inductor units of N phases, that is, the power inductor includes N windings 2 and corresponding quantities of first magnetic columns 101, second magnetic columns 104, third magnetic columns 105, first cover plates 102, and second cover plates 103, which may be specifically disposed with reference to the power inductor shown in FIG. 4 to FIG. 9. Details are not described herein again.

The inverter usually includes a plurality of direct current conversion circuits 2001. Each direct current conversion circuit 2001 includes at least one switch module in addition to a power inductor 100, and at least two windings 2 of the power inductor each are connected to at least one switch module in a different direct current conversion circuit 2001 in the plurality of direct current conversion circuits 2001.

It should be noted that in this application, the at least one switch module of each direct current conversion circuit 2001 may also be disposed on the circuit board 2004 shown in FIG. 10 and FIG. 11. In addition, for application of the power inductor 100 in the direct current conversion circuit 2001, refer to the foregoing description of the application of the power inductor 100 in the inverter circuit 2002. Details are not described herein again.

It may be understood that, in this application, the power inductor 100 of the direct current conversion circuit 2001 is designed in the manner of designing the power inductor 100 provided in this application, so that a coupling coefficient between inductor units of two adjacent phases can be effectively reduced, thereby reducing mutual impact between the inductor units of two adjacent phases, improving integration of the power inductor 100, and improving integration of the direct current conversion circuit 2001.

In the power inductor 100 provided in embodiments of this application, a third magnetic column 105 is added to an inductor unit of each phase, to form a plurality of magnetic circuits in the inductor unit of each phase, so that most of magnetic flux generated by the inductor unit of each phase may be conducted through the magnetic circuits of the inductor unit of the phase. This can effectively avoid mutual impact between inductor units of two adjacent phases, that is, reduce a coupling coefficient between the inductor units of two adjacent phases, thereby helping improve magnetic conductivity of the power inductor 100.

In the foregoing embodiments of this application, application of the power inductor 100 in the inverter is used as an example for description. It may be understood that the power inductor 100 provided in this application may be further used in another power device, and specific manners of disposing the power inductor 100 in various power devices are similar to the foregoing manner of disposing the power inductor 100 in the inverter. Details are not described herein, but it should be understood that the manners all fall within the protection scope of this application.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A power device, comprising an inverter circuit, wherein the inverter circuit comprises N inverter bridge arms and a filter inductor, and N is an integer greater than or equal to 2;
the filter inductor comprises a magnetic core and N windings, and the magnetic core comprises N first magnetic columns, at least N-1 second magnetic columns, N third magnetic columns, N first cover plates, and at least one second cover plate;
in a direction perpendicular to an axial direction of the first magnetic column, the N first magnetic columns are sequentially arranged, and one second magnetic column is disposed between two adjacent first magnetic columns;
the N first cover plates are connected to ends of the N first magnetic columns in a one-to-one correspondence, and the other end of each first magnetic column is connected to the second cover plate;
one end of each second magnetic column is connected between two adjacent first cover plates, and the other end of each second magnetic column is connected to the second cover plate;
each third magnetic column is located between two wire connectors of one winding, one end of each third magnetic column is connected to one first cover plate, and the other end of each third magnetic column is connected to one second cover plate; and
the N windings are wound around the N first magnetic columns in a one-to-one correspondence, and the N windings are respectively connected to output loops of different inverter bridge arms in the N inverter bridge arms.

2. The power device according to claim 1, wherein the magnetic core comprises N+1 second magnetic columns, and each first magnetic column is located between two adjacent second magnetic columns.

3. The power device according to claim 1 or 2, wherein the magnetic core comprises one second cover plate, and the other ends of the N first magnetic columns are all connected to the second cover plate.

4. The power device according to claim 1 or 2, wherein the magnetic core comprises N second cover plates, the N second cover plates are connected to the other ends of the N first magnetic columns in a one-to-one correspondence, and the other end of each second magnetic column connected between two adjacent first cover plates is connected between two adjacent second cover plates.

5. The power device according to any one of claims 1 to 4, wherein one end of one side surface of each third magnetic column is connected to one first cover plate, and another end of the side surface of each third magnetic column is connected to one second cover plate.

6. The power device according to any one of claims 1 to 4, wherein each third magnetic column is located between one first cover plate and one second cover plate.

7. The power device according to claim 6, wherein the third magnetic column comprises an arc-shaped surface, and the arc-shaped surface is recessed in a direction away from the winding.

8. The power device according to any one of claims 1 to 7, wherein the first magnetic column, the second magnetic column, and the third magnetic column are made of a same material.

9. The power device according to any one of claims 1 to 7, wherein a magnetic permeability of the second magnetic column is greater than a magnetic permeability of the first magnetic column.

10. The power device according to any one of claims 1 to 9, wherein wire connectors of the N windings are all located on a same side of the magnetic core.

11. The power device according to any one of claims 1 to 10, wherein a surface that is of the first magnetic column and that is away from the third magnetic column comprises a plane, the filter inductor further comprises a housing having an opening, the magnetic core and the winding are accommodated in the housing, and an outer surface of a part that is of the winding and that is wound on the plane of the first magnetic column is in contact with an inner side wall of the housing; and
the power device further comprises a chassis and a circuit board, the circuit board is accommodated in the chassis, the N inverter bridge arms are disposed on the circuit board, the chassis comprises a slot, the opening of the housing is connected to an edge of the slot, and the wire connectors of the N windings are all connected to the output loops of the different inverter bridge arms in the N inverter bridge arms through the slot.

12. The power device according to any one of claims 1 to 10, wherein the power device further comprises a chassis and a circuit board, the circuit board is accommodated in the chassis, and the N inverter bridge arms are disposed on the circuit board; and
the filter inductor is accommodated in the chassis, a surface that is of the first magnetic column and that is away from the third magnetic column comprises a plane, an outer surface of a part that is of the winding and that is wound on the plane of the first magnetic column is in contact with an inner wall surface of the chassis, and the wire connectors of the N windings are connected to the output loops of the different inverter bridge arms in the N inverter bridge arms.

13. A power device, comprising N direct current conversion circuits, wherein each direct current conversion circuit comprises at least one switch module and a power inductor, and N is an integer greater than or equal to 2;
the power inductor comprises a magnetic core and N windings, and the magnetic core comprises N first magnetic columns, at least N-1 second magnetic columns, N third magnetic columns, N first cover plates, and at least one second cover plate;
in a direction perpendicular to an axial direction of the first magnetic column, the N first magnetic columns are sequentially arranged, and one second magnetic column is disposed between two adjacent first magnetic columns;
the N first cover plates are connected to ends of the N first magnetic columns in a one-to-one correspondence, and the other end of each first magnetic column is connected to the second cover plate;
one end of each second magnetic column is connected between two adjacent first cover plates, and the other end of each second magnetic column is connected to the second cover plate;
each third magnetic column is located between two wire connectors of one winding, one end of each third magnetic column is connected to one first cover plate, and the other end of each third magnetic column is connected to one second cover plate; and
the N windings are wound around the N first magnetic columns in a one-to-one correspondence, and the N windings each are connected to at least one switch module in a different direct current conversion circuit in the N direct current conversion circuits.

14. A power inductor, comprising a magnetic core and N windings, wherein the magnetic core comprises N first magnetic columns, at least N-1 second magnetic columns, N third magnetic columns, N first cover plates, and at least one second cover plate, and N is an integer greater than or equal to 2;
in a direction perpendicular to an axial direction of the first magnetic column, the N first magnetic columns are sequentially arranged, and one second magnetic column is disposed between two adjacent first magnetic columns;
the N first cover plates are connected to ends of the N first magnetic columns in a one-to-one correspondence, and the other end of each first magnetic column is connected to the second cover plate;
one end of each second magnetic column is connected between two adjacent first cover plates, and the other end of each second magnetic column is connected to the second cover plate;
each third magnetic column is located between two wire connectors of one winding, one end of each third magnetic column is connected to one first cover plate, and the other end of each third magnetic column is connected to one second cover plate; and
the N windings are wound around the N first magnetic columns in a one-to-one correspondence.

15. The power inductor according to claim 14, wherein the magnetic core comprises N+1 second magnetic columns, and each first magnetic column is located between two adjacent second magnetic columns.
